# EUROPEAN PATENT SPECIFICATION

(11) **EP 1 599 663 B1**
(45) Date of publication and mention of the grant of the patent: **25.10.2006**
(21) Application number: 04703299.0
(22) Date of filing: 19.01.2004
(51) Int. Cl.: F02C 9/18

(54) **CONTROL OF A GAS TURBINE WITH HOT-AIR REACTOR**
STEUERUNG EINER GASTURBINE MIT HEISSLUFTREAKTOR
REGULATION D'UNE TURBINE A GAZ AU MOYEN D'UN REACTEUR GENERANT DE L'AIR CHAUD

(30) Priority: 20.01.2003 SE 0300131
(43) Date of publication of application: 30.11.2005
(73) Proprietor: ALSTOM Power Sweden Holding AB, 612 82 Finspang (SE); NORSK HYDRO ASA, 0240 Oslo (NO)
(72) Inventor: HAMRIN, Stellan, S-736 93 Kungsör (SE)
(74) Representative: Hammond, Andrew David
(86) International application number: PCT/SE2004/000058
(87) International publication number: WO 2004/065770

(56) References cited:
- WO-A1-02/053969
- JP-A- 6 074 061

## Description

### TECHNICAL FIELD

The invention relates to a gas turbine in which combustion of a fuel takes place in a slow reactor, that is to say a reactor which cannot be rapidly controlled in the event of load fluctuations, for example by controlling the fuel supply. The invention relates in particular to an arrangement and a method for controlling a gas turbine in different operating situations occurring in the use of such a reactor.

### PRIOR ART

A special gas turbine-based power generating process is proposed using a concept known by the abbreviation AZEP (Advanced Zero Emissions Power Plant). This process represents a cost-effective way of reducing local and global emissions. The innovative cycle on which the process is based makes it possible to reduce the carbon dioxide (CO₂) emissions by 100%. A number of complementary additions allow conventional air-based gas turbine equipment to be used for power generation. The loss in plant efficiency is less than 2%. The key to achieving these objectives is the development of a reactor integrated with a gas turbine, in which oxygen (O₂) is separated from the air in the reactor, so that combustion of a fuel can take place in a nitrogen-free environment.

The AZEP concept will not be described further in this document, since the concept sets forth a known process. As an example of the prior art, reference will be made here to an article from the "Second Nordic Minisymposium on Carbon Dioxide Capture and Storage" held in Gothenburg on 26 October, 2001 and entitled "AZEP - Development of an Integrated Air Separation Membrane - Gas Turbine", by the authors Sundkvist, Griffin and Thorsaug. Everything described in the said article is hereby incorporated into the present specification.

The AZEP concept proposes a process for generating power with zero emissions. The use of a so-called Mixed Conducting Membrane (MCM) provides a solution to this. This membrane produces pure oxygen from air. Research centred on these oxygen-selective membranes has increased markedly in recent years. The MCM membranes are made up of complex crystalline structures, which contain vacancies and oxygen ions. The principle on which oxygen ions are transported through a membrane involves surface adsorption followed by decomposition into ions which are transported through the membrane by a sequential occupation of ion vacancies. The transport of ions is counterbalanced by a flow of electrons through the membrane in the opposite direction. The motive force is a difference between the partial pressure of the oxygen on both sides of the membrane. The transport furthermore requires high temperatures in excess of 700°C.

The integration of MCM technology into power plants can be achieved by various means. A number of solutions with separated cycles characterised by different cycle efficiencies have been studied and compared with the best possible existing technologies. This has shown that the most efficient, cost-effective and promising application of an MCM reactor is to integrate it into a conventional gas turbine. The MCM reactor, which combines oxygen separation, combustion and heat transfer processes, is thereby intended to replace the conventional burners in a gas turbine power plant of standard design, as is shown in Fig. 1 and disclosed in the document WO-A-02 053 969. The gas turbine set and its auxiliary equipment consist of standard arrangements. Fig. 1 shows the basic setup of said concept with a gas turbine using methane combustion in an MCM reactor. Air is fed to a compressor C, from whence the compressed, heated air is delivered to the reactor 1. In the reactor 1 a gas, in this case methane, is burnt. Heat from the combustion raises the temperature of the air fed to the reactor, following which the hot air drives a gas turbine T. Useful power is utilised by a generator G mounted on the same shaft as the compressor and the gas turbine. Extending through the length of the reactor is an MCM membrane M. Oxygen is transported through the membrane in the figure from the so-called air-circuit of the reactor 1 towards the sweep circuit of the reactor. In the sweep circuit the gas is burned in a reaction with oxygen, following which the combustion gases, largely carbon dioxide and water, give off heat via a heat exchanger and are then delivered to a turbine T2, which is driven by the combustion gases. The water and the carbon dioxide are then taken up by equipment (not shown), downstream of the outlet 2.

One problem that has to be overcome in order to drive a gas turbine with an MCM reactor is how to control the plant. In a conventional gas turbine generating a hot gas, as distinct from the generation of hot air in the present plant, the gas turbine is readily controlled by regulating the fuel supply to one or more burners between compressor and gas turbine according to the load requirements. Such control is impossible with the very slow type of reactor represented by an MCM reactor. That is to say rapid changes in the power output which it delivers to the gas turbine are not possible. An object of the present invention is to demonstrate a solution to this problem.

### SUMMARY OF THE INVENTION

A first aspect of the invention sets forth an arrangement for controlling a gas turbine, the burner of which consists of a reactor which is preferably maintained at a constant temperature, the arrangement being characterized by the characteristic features according to the independent device claim.

A second aspect of the invention sets forth a method for controlling said plant according to the independent method claim.

Arranging the AZEP reactor separate from the gas turbine makes it possible to achieve a rapid separation of the gas turbine from the reactor in respect of the load.

The general object of the aspects of the invention is to keep the temperature of the reactor stable, quite simply by controlling the output from the reactor burner and also controlling the mass flow through the sweep circuit in the reactor. The pressure in the seep circuit is kept at a constant level in relation to the pressure in the air ducts of the reactor. This is achieved by controlling the ordinary gas output and, in extreme situations, a gas blow-off valve. If the increase in pressure from the gas turbine compressor is more rapid than can be produced by feeding fuel into the sweep circuit, additional steam injection into the reactor must be considered.

The turbine and its compressor are controlled by means of the conventional blow-off outlets and the rotatable guide vanes in the compressor and by controlling the turbine inlet temperature. According to the aspect of the invention the temperature is controlled by means of a valve set, which controls a mixture of hot air from the reactor and air from the compressor, which has been made to bypass the reactor via the valve set. One set of valves may be sufficient if the air flow resistance as the air flows through the reactor can be such that the temperature of the air to the turbine is low enough for all loads when the regulating valve that bypasses the reactor is fully open. If the flow resistance through the reactor is too low, an additional valve set must be arranged in the cold air passage to the reactor.

Apart from the slowness of the reactor, a major advantage in being able to maintain the reactor at the high temperature when controlling the plant is that it is possible to extract oxygen from the air for the combustion process in the sweep circuit without the need to supply additional oxygen, which becomes necessary if the temperature in the reactor is reduced in an attempt to control the plant with the aid of adjustments to the running of the reactor.

Further examples of the working of the gas turbine control disclosed and its application in various operating situations will be demonstrated with reference to the following examples of embodiment.

### DESCRIPTION OF THE DRAWINGS

Fig. 1 shows a gas turbine plant with an MCM reactor proposed in the prior art.
Fig. 2 in a schematic and symbolic diagram shows how a gas turbine plant according to the aspects of the invention is arranged.
Fig. 3 illustrates a gas turbine plant according to the invention, showing the various gas flows in gas turbine and reactor more clearly.

### EXAMPLES OF EMBODIMENTS OF THE INVENTION

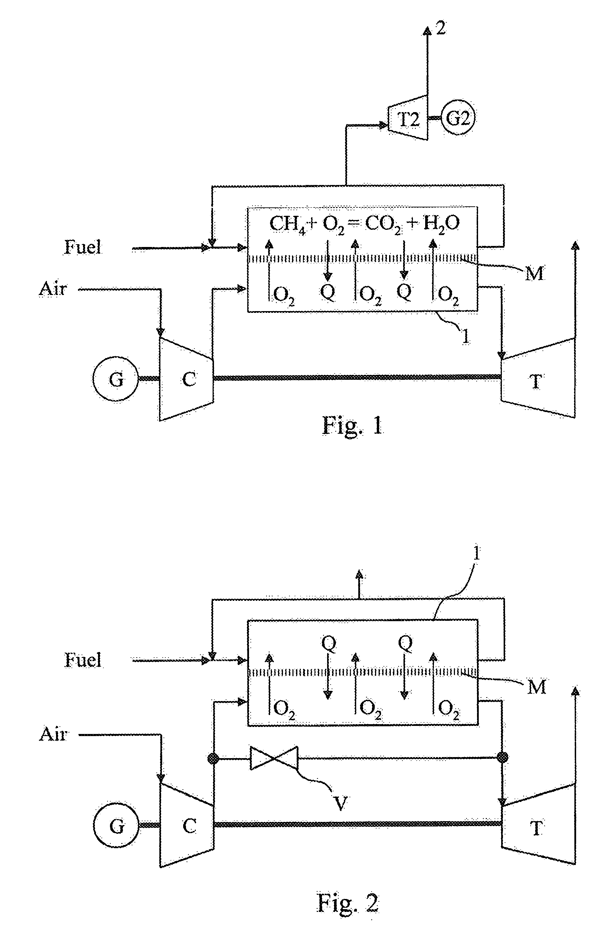

The invention will be described below with reference to the drawings attached. An arrangement in the form of a gas turbine plant, which is controlled according to the aspects of the invention, is shown in Fig. 1 described above.

The arrangement for controlling the plant is shown in schematic form in Fig. 2. In the said figure C represents a compressor for compressing air, which after compression is delivered at increased pressure and higher temperature to an MCM reactor 1 according to the prior art. In the reactor 1 a fuel, in this case methane gas, is burned. The reactor comprises a heat exchanger, which gives off heat from the sweep circuit in the reactor to the air in the air circuit via the membrane M, which divides the reactor into a sweep circuit side and an air circuit side. The temperature of the air is thereby increased to around 1250°C. This heated air drives the gas turbine T. In order to be able to control the plant reliably and in different types of operating situation, according to the aspect of the invention a regulating valve V is arranged in parallel with the reactor 1, The regulating valve V is preferably located on the cold side of the air circuit. The regulating valve V can thus be used to short-circuit the air flow over the reactor 1. This makes it possible to control the temperature at the inlet to the gas turbine T entirely within the temperature range that is defined by the lower temperature at the outlet of the compressor C and the higher temperature at the outlet of the reactor 1, which is normally kept at approximately 1250°C. As stated, it is advantageous to maintain the process in the reactor at a largely constant high temperature. In this way the operation of the reactor can be isolated from actual control of the load uptake from the gas turbine. By using the regulating valve V to mix the cooler air from the compressor C with the hot air from the reactor 1, the load of the gas turbine T can be controlled in the desired way.

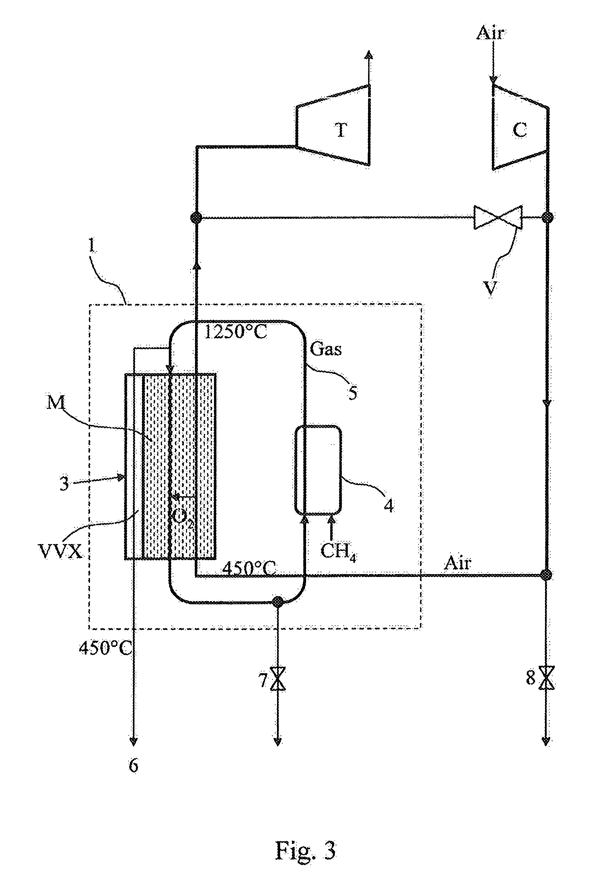

Fig. 3 shows the gas and air flows through the plant according to the invention more clearly. The compressed air from the compressor C is fed into the reactor 1 through a core 3, which contains the membrane M. This membrane contains a large number of parallel, pore-like ducts for air and for gas. Each air duct is surrounded by gas ducts and vice-versa. The process described above for transporting oxygen from air to gas takes place in the material between the air ducts and the gas ducts. The core 3 also contains a heat exchanger VVX, which transfers heat from the hot gas to the air, so that the air is thereby heated to approximately 1250°C before the hot air is delivered to the turbine T. The hot gas is produced in one or more burners 4, which are included in the reactor 1. In the example shown the gas consists of methane which is burned in the burner 4. Also running through the burner 4 is a sweep circuit 5. The gas in this sweep circuit 5 is produced in the burner 4, following which the hot gas gives off heat via the heat exchanger VVX in the core 3 of the reactor 1. Due to the addition of oxygen from the air in the air circuit via the membrane M, the gas in the sweep circuit becomes oxygen-enriched and is capable of maintaining the combustion in the burner 4 to where the gas is fed from the core 3. After giving off heat, the gas has been cooled to approximately 450°C before it reaches the burner 4. Used gas is also led off via a line 6 to the turbine T2 shown in Fig. 1, which further utilizes the heat, following which the gas is transported further for processing of its carbon dioxide and water content. The figure also shows a gas blow-off valve 7 for releasing gas from the sweep circuit. Also shown is an air blow-off valve 8 for releasing air from the air circuit.

A number of different plant operating situations are described below.

In the event of a load change the temperature in the sweep circuit of the reactor must be kept constantly at maximum temperature. The mass flow in the reactor sweep circuit is maintained so that the heat capacity flow in the sweep circuit is equal to the heat capacity flow in the air circuit of the reactor.

In the case of a hot shutdown of the plant, in which access to the reactor is not required, the reactor 1 is isolated from the turbine T. This is done in that the air flow over the reactor is short-circuited outside the reactor by fully opening the regulating valve V. A small air flow through the reactor is still maintained so as to keep up the temperature profile of the reactor and in order to keep burners at the inlet to the sweep circuit at full load temperature.

The reactor 1 can be shut down in several different ways. An emergency shutdown, as a result of a turbine failure, for example, can be achieved by isolating the turbine from the reactor in the same way as in the hot shutdown. In this case, however, the reactor is shut off quite simply by shutting off the burners. If necessary, the circulation in the sweep circuit can also be shut down. Another alternative for shutting down the reactor which allows more rapid access to the reactor and its core is for the burners and the circulation in the sweep circuit to be shut off, but for the turbine to gradually extract heat from the reactor so that it is consequently cooled.

In a gas turbine trip in which it is necessary to resort to a hot shutdown of the plant, the regulating valve V is fully opened in order that the inlet temperature to the gas turbine T will be reduced and an air blow-off valve 8 is also opened in order to rapidly reduce the temperature in the gas turbine. The regulating valve V according to the invention is shown fitted between the hot and cold side of the air circuit, as described above.

## Claims

1. Gas turbine plant comprising a compressor (C), a turbine (T) and a reactor (1) for heating air, in which air is compressed in the compressor (C) and together with a fuel is delivered to the reactor in order to maintain combustion, and in which the air heated in the reactor drives the turbine (T), **characterised in that** control of the load of the turbine (T) consists of controlling the inlet temperature to the turbine (T) by mixing hot air from the reactor (1) with air from the compressor by means of a regulating valve (V) arranged between the outlet of the compressor (C) and the inlet of the gas turbine (T).

2. Gas turbine plant according to Claim 1, **characterised in that** the reactor (1) is an Mixed Conducting Membrane reactor.

3. Gas turbine plant according to either of Claims 1 or 2, **characterised in that** the regulating valve (V) is fitted in a line which bypasses the air circuit of the reactor (1).

4. Gas turbine plant according to Claim 3, **characterised in that** the regulating valve is fitted closer to the cooler side of said bypass line.

5. Gas turbine plant according to any one of Claims 2 to 4, **characterised in that** the Mixed Conducting Membrane reactor (1) comprises an air circuit which leads air from the compressor (C) along a first side of a membrane (M), which transports oxygen from the air to a hot gas on the other opposite side of the membrane and that as the air in the air circuit passes through the reactor it is heated by a heat exchanger (VVX) inside the reactor (1)

6. Gas turbine plant according to Claim 5, **characterised in that** the reactor (1) comprises a sweep circuit (5), which includes at least one burner (4) in which the fuel is burned and generates a hot gas in the sweep circuit, and that the hot gas is led through the reactor on the other side of said membrane (M), where it is enriched with oxygen and the hot gas in the sweep circuit gives off heat to the air in the heat exchanger (VVX) before the cooled gas is delivered to an outlet (6).

7. Gas turbine plant according to Claim 6, **characterised in that** the sweep circuit comprises a blow-off valve (7).

8. Gas turbine plant according to any one of Claims 5 to 7, **characterised in that** the air circuit comprises an air blow-off valve (8).

9. Gas turbine plant according to Claim 1, **characterised in that** the reactor (1) is kept at a temperature corresponding to the full load of the reactor.

10. Gas turbine plant according to Claim 9, **characterised in that** said temperature is maintained by controlling the flow of air and fuel through the reactor.

11. Method of controlling the load in a gas turbine plant, comprising the following steps:
- air is compressed in a compressor (C),
- the compressed air is led through an air circuit in a reactor (1) which comprises an Mixed Conducting Membrane membrane (M),
- a fuel is delivered to a burner (4) in a sweep circuit (5) in the reactor (1) where a hot gas is formed by a combustion in the burner,
- the hot gas is made to give off heat to the air in the air circuit via a heat exchanger in the reactor (1),
- in the reactor (1) the hot gas is enriched with oxygen which is transported to the sweep circuit from the air in the air circuit via the membrane (M),
- the air heated in the reactor (1) is led off to an inlet of a gas turbine (T) in order to drive the gas turbine, the method being **characterised in that**:
- control of the load in the plant is achieved by controlling a regulating valve V, which allows air direct from the outlet of the compressor (C) to be mixed with hot air from the reactor (1), so that the temperature of the air to the inlet of the gas turbine (T) can be controlled as a function of the load uptake from the gas turbine (1).

12. Method according to Claim 11, **characterised in that** the regulating valve sets the temperature at the inlet to the gas turbine to between 450°C and 1250°C.

13. Method according to Claim 11 or 12, **characterised in that** the reactor (1) is allowed to operate at a temperature corresponding to full load when controlling load changes of the gas turbine (T).

14. Method according to Claim 11, **characterised in that** a rapid shutdown of the plant can be achieved by fully opening the regulating valve (V) so that virtually all the air from the compressor bypasses the reactor (1).

15. Method according to Claim 11, **characterised in that** a rapid shutdown of the gas turbine (T) can be achieved by fully opening the regulating valve (V) so that virtually all the air from the compressor bypasses the reactor (1).

## Patentansprüche

1. Gasturbinenanlage mit einem Kompressor (C), einer Turbine (T) und einem Reaktor (1) zum Erhitzen von Luft, in welcher Luft im Kompressor (C) komprimiert und zusammen mit einem Brennstoff zum Reaktor abgegeben wird, um eine Verbrennung aufrechtzuerhalten, und in welcher die im Reaktor erhitzte Luft die Turbine (T) antreibt, **dadurch gekennzeichnet, dass** die Steuerung der Belastung der Turbine (T) darin besteht, die Einlasstemperatur in die Turbine (T) zu regeln, indem Heißluft aus dem Reaktor (1) mit Luft aus dem Kompressor mittels eines Regelventils (V) gemischt wird, das zwischen dem Auslass des Kompressors (C) und dem Einlass der Gasturbine (T) angeordnet ist.

2. Gasturbinenanlage nach Anspruch 1, **dadurch gekennzeichnet, dass** es sich bei dem Reaktor (1) um einen Mischdurchlassmembran-Reaktor (*Mixed Conducting Membrane Reactor*) handelt.

3. Gasturbinenanlage nach einem der Ansprüche 1 oder 2, **dadurch gekennzeichnet, dass** das Regelventil (V) in eine Leitung eingebaut ist, die den Luftkreislauf des Reaktors (1) umgeht.

4. Gasturbinenanlage nach Anspruch 3, **dadurch gekennzeichnet, dass** das Regelventil näher an der kühleren Seite der Umgehungsleitung eingebaut ist.

5. Gasturbinenanlage nach einem der Ansprüche 2 bis 4, **dadurch gekennzeichnet, dass** der Mischdurchlassmembran-Reaktor (1) einen Luftkreislauf umfasst, der Luft aus dem Kompressor (C) eine erste Seite einer Membran (M) entlang leitet, die Sauerstoff aus der Luft zu einem Heißgas auf der anderen, entgegengesetzten Seite der Membran transportiert, und dass, wenn die Luft im Luftkreislauf den Reaktor durchfließt, sie durch einen Wärmetauscher (VVX) im Inneren des Reaktors (1) erhitzt wird.

6. Gasturbinenanlage nach Anspruch 5, **dadurch gekennzeichnet, dass** der Reaktor (1) einen Durchlaufkreislauf (5) umfasst, der mindestens einen Brenner (4) enthält, in dem der Brennstoff verbrannt wird, und der im Durchlaufkreislauf ein Heißgas erzeugt, und dass das Heißgas auf der anderen Seite der Membran (M) durch den Reaktor geleitet wird, wo es mit Sauerstoff angereichert wird, und das Heißgas im Durchlaufkreislauf Wärme an die Luft im Wärmetauscher (VVX) abgibt, bevor das abgekühlte Gas zu einem Auslass (6) abgegeben wird.

7. Gasturbinenanlage nach Anspruch 6, **dadurch gekennzeichnet, dass** der Durchlaufkreislauf ein Abblasventil (7) umfasst.

8. Gasturbinenanlage nach einem der Ansprüche 5 bis 7, **dadurch gekennzeichnet, dass** der Luftkreislauf ein Luftabblasventil (8) umfasst.

9. Gasturbinenanlage nach Anspruch 1, **dadurch gekennzeichnet, dass** der Reaktor (1) auf einer Temperatur gehalten wird, die der vollen Belastung des Reaktors entspricht.

10. Gasturbinenanlage nach Anspruch 9, **dadurch gekennzeichnet, dass** die Temperatur gehalten wird, indem der Luft- und Brennstoffstrom durch den Reaktor gesteuert wird.

11. Verfahren zum Steuern der Belastung in einer Gasturbinenanlage, das die folgenden Schritte umfasst:
- Luft wird in einem Kompressor (C) komprimiert,
- die komprimierte Luft wird durch einen Luftkreislauf in einen Reaktor (1) geleitet, der eine Mischdurchlassmembran (M) umfasst,
- ein Brennstoff wird zu einem Brenner (4) in einem Durchlaufkreislauf (5) im Reaktor (1) abgegeben, wo durch eine Verbrennung im Brenner ein Heißgas entsteht,
- man lässt das Heißgas über einen Wärmetauscher im Reaktor (1) Wärme an die Luft im Luftkreislauf abgeben,
- im Reaktor (1) wird das Heißgas mit Sauerstoff angereichert, der aus der Luft im Luftkreislauf über die Membran (M) zum Durchlaufkreislauf transportiert wird,
- die im Reaktor (1) erhitzte Luft wird zu einem Einlass einer Gasturbine (T) abgeleitet, um die Gasturbine anzutreiben, wobei das Verfahren **dadurch gekennzeichnet ist, dass:**
- die Steuerung der Belastung in der Anlage durch Ansteuern eines Regelventils (V) erzielt wird, das Luft, die direkt aus dem Auslass des Kompressors (C) kommt, sich mit Heißluft aus dem Reaktor (1) mischen lässt, so dass die Temperatur der Luft zum Einlass der Gasturbine (T) in Abhängigkeit von der Lastentnahme aus der Gasturbine (T) geregelt werden kann.

12. Verfahren nach Anspruch 11, **dadurch gekennzeichnet, dass** das Regelventil die Temperatur am Einlass zur Gasturbine auf zwischen 450°C und 1250°C einstellt.

13. Verfahren nach Anspruch 11 oder 12**, dadurch gekennzeichnet, dass** man den Reaktor (1) bei einer der vollen Belastung entsprechenden Temperatur laufen lässt, wenn die Belastungsveränderungen der Gasturbine (T) gesteuert werden.

14. Verfahren nach Anspruch 11**, dadurch gekennzeichnet, dass** eine schnelle Abschaltung der Anlage durch volles Öffnen des Regelventils (V) erzielt werden kann, so dass praktisch die gesamte Luft aus dem Kompressor den Reaktor (1) umgeht.

15. Verfahren nach Anspruch 11, **dadurch gekennzeichnet, dass** eine schnelle Abschaltung der Gasturbine (T) durch volles Öffnen des Regelventils (V) erzielt werden kann, so dass praktisch die gesamte Luft aus dem Kompressor den Reaktor (1) umgeht.

## Revendications

1. Installation de turbine à gaz comportant un compresseur (C), une turbine (T) et un réacteur (1) pour chauffer de l'air, dans laquelle l'air est comprimé dans le compresseur (C) et, associé à un combustible, est envoyé au réacteur afin de maintenir une combustion, et dans laquelle l'air chauffé dans le réacteur entraîne la turbine (T), **caractérisée en ce qu'**une commande de la charge de la turbine (T) consiste à commander la température d'entrée dans la turbine (T) en mélangeant de l'air chaud provenant du réacteur (1) avec de l'air provenant du compresseur par l'intermédiaire d'une vanne de régulation (V) agencée entre la sortie du compresseur (C) et l'entrée de la turbine (T).

2. Installation de turbine à gaz selon la revendication 1, **caractérisée en ce que** le réacteur (1) est un réacteur à membrane conductrice mixte.

3. Installation de turbine à gaz selon la revendication 1 ou 2, **caractérisée en ce que** la vanne régulatrice (V) est agencée dans une ligne qui est dérivée du circuit d'air du réacteur (1).

4. Installation de turbine à gaz selon la revendication 3, **caractérisée en ce que** la vanne régulatrice est agencée plus près du côté plus froid de ladite ligne de dérivation.

5. Installation de turbine à gaz selon l'une quelconque des revendications 2 à 4, **caractérisée en ce que** le réacteur à membrane conductrice mixte (1) comporte un circuit d'air qui amène de l'air en provenance du compresseur (C) le long d'un premier côté d'une membrane (M), qui transporte l'oxygène provenant de l'air vers un gaz chaud situé sur l'autre côté opposé de la membrane et **en ce que** lorsque l'air du circuit d'air passe à travers le réacteur, il est chauffé par un échangeur thermique (VVX) à l'intérieur du réacteur (1).

6. Installation de turbine à gaz selon la revendication 5, **caractérisée en ce que** le réacteur (1) comporte un circuit de balayage (5), qui comporte au moins un brûleur (4) dans lequel le combustible est brûlé et produit un gaz chaud dans le circuit de balayage et **en ce que** le gaz chaud est amené à travers le réacteur de l'autre côté de ladite membrane (M), où il est enrichi en oxygène et le gaz chaud dans le circuit de balayage donne de la chaleur à l'air dans l'échangeur thermique (VVX) avant que le gaz refroidi ne soit fourni à une sortie (6).

7. Installation de turbine à gaz selon la revendication 6, **caractérisée en ce que** le circuit de balayage comporte une soupape de décharge (7).

8. Installation de turbine à gaz selon l'une quelconque des revendications 5 à 7, **caractérisée en ce que** le circuit d'air comporte une soupape de décharge d'air (8).

9. Installation de turbine à gaz selon la revendication 1, **caractérisée en ce que** le réacteur (1) est maintenu à une température correspondant à la charge complète du réacteur.

10. Installation de turbine à gaz selon la revendication 9, **caractérisée en ce que** ladite température est maintenue en commandant l'écoulement d'air et de combustible à travers le réacteur.

11. Procédé de commande de la charge d'une installation de turbine à gaz, comportant les étapes suivantes :
- de l'air est comprimé dans un compresseur (C),
- l'air comprimé est acheminé à travers un circuit d'air dans un réacteur (1) qui comporte une membrane conductrice mixte (M),
- un combustible est fourni à un brûleur (4), situé dans un circuit de balayage (5) du réacteur (1), où un gaz chaud est formé par une combustion dans le brûleur,
- le gaz chaud est amené à donner de la chaleur à l'air dans le circuit d'air via un échangeur thermique situé dans le réacteur (1),
- dans le réacteur (1) le gaz chaud est enrichi en oxygène, qui est transporté vers le circuit de balayage, en provenance de l'air situé dans le circuit d'air via la membrane (M),
- l'air chauffé dans le réacteur (1) est acheminé vers une entrée d'une turbine à gaz (T) afin d'entraîner la turbine à gaz, le procédé étant **caractérisé en ce que** :
- la commande de la charge dans l'installation est obtenue en commandant une vanne de régulation (V), qui permet de mélanger l'air dirigé à partir de la sortie du compresseur (C) avec de l'air chaud provenant du réacteur (1) de sorte que la température de l'air à l'entrée de la turbine à gaz (T) peut être commandée en fonction de la montée en charge de la turbine à gaz (1).

12. Procédé selon la revendication 11, **caractérisé en ce que** la vanne de régulation fixe la température à l'entrée de la turbine à gaz entre 450°C et 1250°C.

13. Procédé selon la revendication 11 ou 12, **caractérisé en ce que** le réacteur (1) peut agir à une température correspondant à la pleine charge lors de la commande de changements de charge de la turbine à gaz (T).

14. Procédé selon la revendication 11, **caractérisé en ce qu'**une coupure rapide de l'installation peut être obtenue en ouvrant entièrement la vanne de régulation (V) de sorte que virtuellement la totalité de l'air provenant du compresseur est dérivée du réacteur (1).

15. Procédé selon la revendication 11, **caractérisé en ce qu'**une coupure rapide de la turbine à gaz (T) peut être obtenue en ouvrant entièrement la vanne de régulation (V) de sorte que virtuellement la totalité de l'air provenant du compresseur est dérivée du réacteur (1).
